# EUROPÄISCHE PATENTSCHRIFT

(11) **EP 4 244 708 B1**
(45) Veröffentlichungstag und Bekanntmachung des Hinweises auf die Patenterteilung: **09.12.2026**
(21) Anmeldenummer: 21805908.7
(22) Anmeldetag: 02.11.2021
(51) Int. Cl.: G06F 3/04847, G06F 3/0488

(54) **VERFAHREN ZUR EINSTELLUNG VON PARAMETERN EINER ÜBERTRAGUNGSFUNKTION**
METHOD FOR SETTING PARAMETERS OF A TRANSFER FUNCTION
PROCÉDÉ DE RÉGLAGE DE PARAMÈTRES D'UNE FONCTION DE TRANSFERT

(30) Priorität: 16.11.2020 CH 14652020
(43) Veröffentlichungstag der Anmeldung: 20.09.2023
(73) Patentinhaber: Quantonomics GmbH, 8001 Zürich (CH)
(72) Erfinder: SONDEREGGER, Lars B., 8125 Zollikerberg (CH)
(74) Vertreter: Eichenberger, Philip
(86) Internationale Anmeldenummer: PCT/EP2021/080392
(87) Internationale Veröffentlichungsnummer: WO 2022/101058

(56) Entgegenhaltungen:
- JP-A- H07 281 707
- US-A1- 2015 206 245
- US-A1- 2018 107 367

## Beschreibung

Die vorliegende Erfindung betrifft ein Verfahren nach dem Oberbegriff des Patentanspruchs 1.

Übertragungsfunktionen beschreiben in mathematischer Weise das Eingangs-/Ausgangsverhalten eines Systems. In allgemeiner Form handelt es sich um einen Quotienten mit zwei Polynomen, die jedes für sich Parameter aufweisen. Die höhe des Grades der Polynome bestimmen die Anzahl der Parameter und damit die Komplexität des zu beschreibenden Systems.

Die Veränderung der Parameter einer solchen Übertragungsfunktion hat einen wesentlichen Einfluss auf das Gesamtverhalten des Systems. Dabei ist es nicht selten, dass Ausgangswerte für die Parameter bekannt sind oder zumindest abgeschätzt werden können. Ferner ist es oftmals gewünscht, die Übertragungsfunktion zu optimieren. Entsprechend werden für ein optimales Gesamtsystemverhalten Zielwerte für die Parameter vorgegeben bzw. es werden optimale Zielwerte für die Parameter gesucht.

Die Dokumente US2018107367A1, US2015206245A1 und JPH07281707A offenbaren Verfahren zur Eingabe von Parameterwerten oder -wertebereichen mit Hilfe von graphisch dargestellten Schiebestellern.

Der vorliegenden Erfindung liegt die Aufgabe zugrunde, ein Verfahren anzugeben, das ein einfaches Erfassen von Anfangswerten und/oder Zielwerten von Parametern ermöglicht.

Diese Aufgabe wird durch die im kennzeichnenden Teil des Patentanspruchs 1 angegebenen Massnahmen gelöst. Vorteilhafte Ausgestaltungen der Erfindung sind in weiteren Ansprüchen angegeben.

Ein Verfahren zur Einstellung mindestens eines Parameters einer Übertragungsfunktion ist angegeben, die ein Eingangs-/Ausgangsverhalten einer Systemeinheit zumindest teilweise definiert, wobei die Systemeinheit mit einer Recheneinheit mit einer Eingabeeinheit zur Einstellung des mindestens einen Parameters wirkverbunden ist. Das erfindungsgemässe Verfahren zeichnet sich dadurch aus, dass zunächst ein Ausgangswert für den mindestens einen Parameter mit Hilfe der Eingabeeinheit eingestellt wird und dass anschliessend ein Zielwert für den entsprechenden mindestens einen Parameter mit Hilfe der Eingabeeinheit eingestellt wird.

Eine Ausführungsvariante des erfindungsgemässen Verfahrens besteht darin, dass die Eingabeeinheit aus einem berührungsempfindlichen Bildschirm besteht oder dass die Eingabeeinheit aus einem Bildschirm mit einem mit diesem wirkverbundenen Zeigegerät besteht, wobei in einem Betriebszustand des Bildschirms dieser einen Cursor abbildet, der eine Position des Zeigegerätes widergibt.

Das erfindungsgemässe Verfahren besteht desweiteren darin, dass Ausgangswerte und Zielwerte für jeden Parameter je über einen Schiebesteller eingestellt werden, wobei jeder der Schiebesteller einzeln auf der Eingabeeinheit graphisch dargestellt ist, dass ein Stellelement des Schiebestellers auf den Anfangswert des jeweiligen Parameters verschoben wird und dass in der Folge das Stellelement des gleichen Schiebestellers des jeweiligen Parameters auf den Zielwert verschoben wird und dass lediglich die für einen Parameter möglichen Ausgangswerte und lediglich die für einen Parameter möglichen Zielwerte mit dem Stellelement eingestellt werden können.

Weitere Ausführungsvarianten des erfindungsgemässen Verfahrens bestehen darin, dass der Anfangswert nach dessen Festlegung auf der Eingabeeinheit dargestellt wird.

Weitere Ausführungsvarianten des erfindungsgemässen Verfahrens bestehen darin, dass der Zielwert nach dessen Festlegung auf der Eingabeeinheit dargestellt wird.

Weitere Ausführungsvarianten des erfindungsgemässen Verfahrens bestehen darin, dass der Anfangswert und der Zielwert eines Parameters innerhalb des Schiebestellers graphisch angezeigt werden.

Es wird darauf hingewiesen, dass die vorstehend aufgeführten Ausführungsvarianten der vorliegenden Erfindung beliebig kombiniert werden können. Lediglich diejenigen Ausführungsvarianten, die durch eine Kombination zu Widersprüchen führen würden, sind ausgeschlossen.

Die vorliegende Erfindung wird im Folgenden anhand von Zeichnungen, die Ausführungsvarianten darstellen, näher erläutert. Dabei zeigen:
- Fig. 1: ein vereinfachtes Blockschaltbild mit den wesentlichen Komponenten zur Durchführung des erfindungsgemässen Verfahrens und
- Fig. 2: einen erfindungsgemässen Schiebesteller zur Einstellung mindestens eines Parameters einer Übertragungsfunktion.

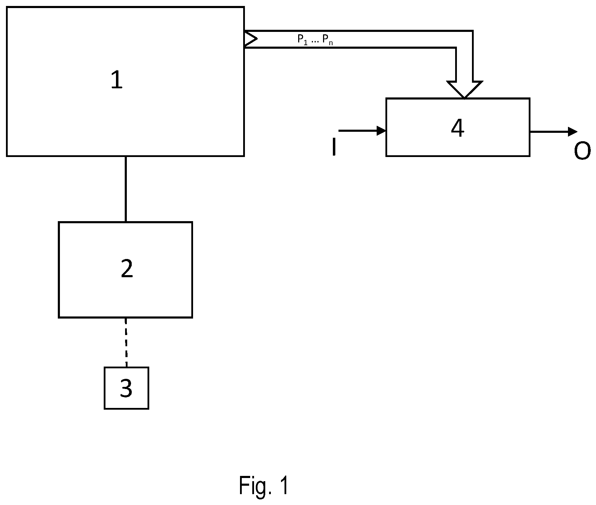

Fig. 1 zeigt eine Recheneinheit 1, mit der eine Eingabeeinheit 2 wirkverbunden ist. Die Eingabeeinheit 2 ist beispielsweise ein berührungsempfindlicher Bildschirm, über den über graphische Elemente - wie zum Beispiel über einen noch zu erläuternden Schiebesteller - Informationen wie Parameter oder dgl. in die Recheneinheit 1 eingegeben werden können. Alternativ besteht die Eingabeeinheit 2 aus einem Bildschirm - sei dieser berührungsempfindlich oder eben berührungslos ausgebildet -, der mit einem Zeigegerät 3 wirkverbunden ist. Das Zeigegerät 3 kann dabei eine Computermaus oder dgl. sein, mit Hilfe derer die Position eines auf dem Bildschirm dargestellten Cursors festgelegt werden kann und so auch graphische Elemente zum Eingeben der Informationen an die Recheneinheit 1 gesteuert bzw. definiert werden können.

Die über die Eingabeeinheit 2 und der Recheneinheit 1 definierten Informationen werden dazu verwendet, um ein Eingangs-/Ausgangsverhalten einer Systemeinheit 4 zu definieren. Hierzu ist die Recheneinheit 1 mit der Systemeinheit 4 wirkverbunden. Über die Wirkverbindung zwischen Recheneinheit 1 und Systemeinheit 4 werden Werte für Parameter P₁, ..., Pₙ, die über eine noch zu erläuternde graphische Benutzerschnittstelle der Eingabeeinheit 2 in die Recheneinheit 1 eingegeben werden, übertragen. Die Werte für die Parameter P₁, ..., Pₙ definieren das Eingangs-/Ausgangsverhalten der Systemeinheit 4. In diesem Zusammenhang wird auch etwa von einer Übertragungsfunktion zwischen dem Eingang I und dem Ausgang O gesprochen.

Für die Recheneinheit 1, die Eingabeeinheit 2 und für das Zeigegerät 3 können handelsübliche Produkte eingesetzt werden. Für die Recheneinheit 1 können dies sogenannte PCs, für die Eingabeeinheit 2 können dies berührungssensitive Bildschirme und für das Zeigegerät 3 kann dies eine Computermaus sein.

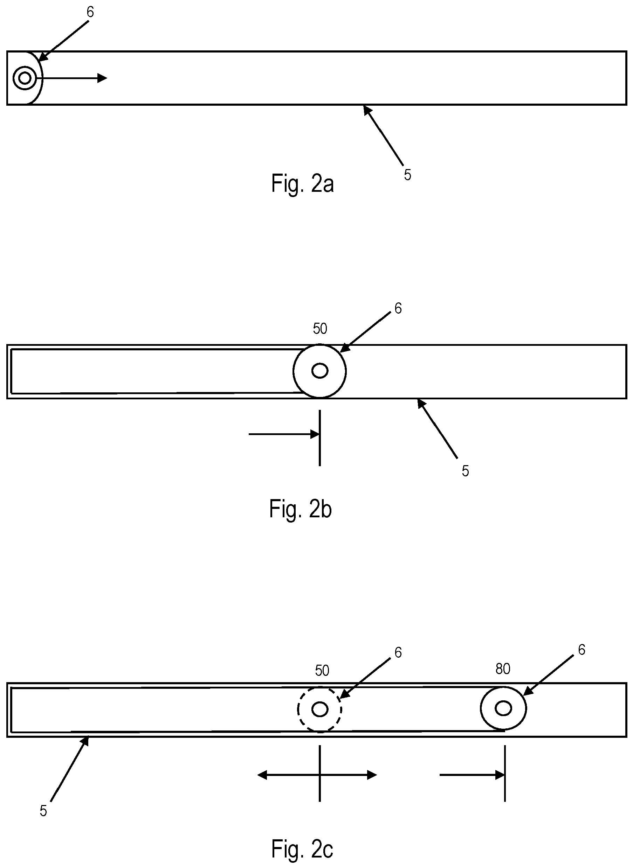

Fig. 2 zeigt verschiedene erfindungsgemässe Schiebesteller 5 zur Einstellung mindestens eines Parameters P₁, ..., Pₙ zur zumindest teilweisen Definition der Übertragungsfunktion zwischen dem Eingang I und dem Ausgang O. Der Schiebesteller 5 gemäss Fig. 2 ist mit einem Stellelement 6, das unterschiedliche Positionen im Schiebesteller 5 einnimmt und den Ablauf der Definition des jeweiligen einzustellenden Parameters wiedergibt:
So ist in Fig. 2a die Ausgangslage dargestellt, bei der sich das Stellelement 6 am linken Rand des Schiebestellers 5 befindet. Die Ausgangslage wird bei einer Einstellung eines Parameters P₁, ..., Pₙ eingenommen als Basiseinstellung. Selbstverständlich kann das Stellelement 6 eine beliebige Position innerhalb des Schiebestellers als Ausgangslage einnehmen.

In der vorliegenden erfindungsgemässen Einstellung der Parameter P₁, ..., Pₙ wird davon ausgegangen, dass jeder Parameter einen Anfangswert und einen Zielwert aufweist, wobei in der Ausgangslage gemäss Fig. 2a nicht zwingend der Anfangswert eingestellt ist. Vielmehr wird davon ausgegangen, dass das Stellelement 6 - wie gemäss Fig. 2b dargestellt - von der Ausgangslage zum Anfangswert des jeweiligen Parameters P₁, ..., Pₙ verschoben wird. Hierzu wird das Stellelement 6 mit einem Finger des Benutzers zum Anfangswert geschoben. Voraussetzung ist hier die Verwendung eines berührungssensitiven Bildschirmes als Eingabeeinheit 2 (Fig. 1). Alternativ kann das Stellelement 6 auch mit einem Zeigegerät 3 an die gewünschte Position innerhalb des Schiebestellers 5 verschoben werden. Diese Position wird von der Recheneinheit 1 eingelesen und als Anfangswert für den jeweiligen Parameter P₁, ..., Pₙ gespeichert.

Schliesslich wird gemäss Fig. 2c das Stellelement 6 von der Position des Anfangswertes für den jeweiligen Parameter P₁, ..., Pₙ in die Position des Zielwertes im Schiebesteller 5 verschoben. Diese Position wird wiederum nach einer Bestätigung, was beispielsweise durch einen Click mit dem Zeigegerät 3 vorgenommen werden kann, als Zielwert für den jeweiligen Parameter P₁, ..., Pₙ in der Recheneinheit 1 gespeichert.

Bei mehreren Parametern P₁, ..., Pₙ - hier durch den Index n zum Ausdruck gebracht - ist es in einer Ausführungsvarianten vorgesehen, dass lediglich ein Schiebesteller 5 auf der Eingabeeinheit 2 dargestellt wird und dass alle n Parameter P₁, ..., Pₙ mit dem gleichen Schiebesteller 5 der Reihe nach eingestellt werden. In einer weiteren Ausführungsvarianten ist es vorgesehen, auf der Eingabeeinheit 2 alle n - oder zumindest mehrere Schiebesteller 5 dargestellt werden und dass dann die Werte für die Parameter P₁, ..., Pₙ an den verschiedenen Schiebesteller 5 eingestellt werden.

Ferner ist es bei weiteren Ausführungsvarianten der vorliegenden Erfindung vorgesehen, dass die numerischen Werte, welche der Position des Stellelementes 6 entspricht, in der Nähe des Stellelementes 6 angezeigt wird, um dem Benutzer eine direkte Rückmeldung über den Wert zu geben.

Erfindungsgemäss ist vorgesehen, dass das Stellelement 6 des Schiebestellers 5 lediglich in einem Bereich eingestellt werden kann, in dem Werte liegen, die für den jeweiligen Parameter P₁, ..., Pₙ überhaupt zulässig sind. Entsprechend werden die unzulässigen Wertebereiche für den jeweiligen Parameter P₁, ..., Pₙ im Schiebesteller 5 für das Stellelement 6 gesperrt.

## Patentansprüche

1. Verfahren zur Einstellung mindestens eines Parameters (P₁, ..., Pₙ) einer Übertragungsfunktion, die ein Eingangs-/Ausgangsverhalten einer Systemeinheit (4) zumindest teilweise definiert, wobei die Systemeinheit (4) mit einer Recheneinheit (1) mit einer Eingabeeinheit (2) zur Einstellung des mindestens einen Parameters (P₁, ..., Pₙ) wirkverbunden ist, **dadurch gekennzeichnet, dass** zunächst ein Ausgangswert für den mindestens einen Parameter (P₁, ..., Pₙ) mit Hilfe der Eingabeeinheit (2) eingestellt wird und dass anschliessend ein Zielwert für den entsprechenden mindestens einen Parameter (P₁, ..., Pₙ) mit Hilfe der Eingabeeinheit (2) eingestellt wird, dass Ausgangswerte und Zielwerte für jeden Parameter (P₁, ..., Pₙ) je über einen Schiebesteller (5) eingestellt werden, wobei jeder der Schiebesteller (5) einzeln auf der Eingabeeinheit (2) graphisch dargestellt ist, dass ein Stellelement (6) des Schiebestellers (5) auf den Ausgangswert des jeweiligen Parameters (P₁, ..., Pₙ) verschoben wird und dass in der Folge das Stellelement (6) des gleichen Schiebestellers (5) des jeweiligen Parameters (P₁, ..., Pₙ) auf den Zielwert verschoben wird und dass lediglich die für einen Parameter (P₁, ..., Pₙ) möglichen Ausgangswerte und lediglich die für einen Parameter (P₁, ..., Pₙ) möglichen Zielwerte mit dem Stellelement (6) eingestellt werden können.

2. Verfahren nach Anspruch 1, **dadurch gekennzeichnet, dass** die Eingabeeinheit (2) aus einem berührungsempfindlichen Bildschirm besteht oder dass die Eingabeeinheit (2) aus einem Bildschirm mit einem mit diesem wirkverbundenen Zeigegerät (3) besteht, wobei in einem Betriebszustand des Bildschirms dieser einen Cursor abbildet, der eine Position des Zeigegerätes (3) widergibt.

3. Verfahren nach Anspruch 1 oder 2, **dadurch gekennzeichnet, dass** der Ausgangswert nach dessen Festlegung auf der Eingabeeinheit (2) dargestellt wird.

4. Verfahren nach einem der Ansprüche 1 bis 3, **dadurch gekennzeichnet, dass** der Zielwert nach dessen Festlegung auf der Eingabeeinheit (2) dargestellt wird.

5. Verfahren nach einem der Ansprüche 1 bis 4, **dadurch gekennzeichnet, dass** der Ausgangswert und der Zielwert eines Parameters (P₁, ..., Pₙ) innerhalb des Schiebestellers (5) graphisch angezeigt werden.

## Claims

1. Method for setting at least one parameter (P1, ..., Pn) of a transfer function that at least partially defines an input/output behavior of a system unit (4), wherein the system unit (4) is operatively connected to a computing unit (1) having an input unit (2) for setting the at least one parameter (P1, ..., Pn), **characterized in that** an initial value for the at least one parameter (P1, ..., Pn) is first set using the input unit (2), and **in that** subsequently a target value for the corresponding at least one parameter (P1, ..., Pn) is set using the input unit (2); **in that** initial values and target values for each parameter (P1, ..., Pn) are each set via a slider (5), with each of the sliders (5) being individually represented graphically on the input unit (2); **in that** an adjustment element (6) of the slider (5) is moved to the initial value of the respective parameter (P1, ..., Pn), and **in that** the adjustment element (6) of the same slider (5) for the respective parameter (P1, ..., Pn) is subsequently moved to the target value, and **in that** only the possible initial values and only the possible target values for a given parameter (P1, ..., Pn) can be set using the adjustment element (6).

2. Method according to claim 1, **characterized in that** the input unit (2) consists of a touch-sensitive screen, or **in that** the input unit (2) consists of a screen with a pointing device (3) operatively connected thereto, wherein, in an operating state of the screen, the screen displays a cursor that represents a position of the pointing device (3).

3. Method according to claim 1 or 2, **characterized in that** the initial value, once determined, is displayed on the input unit (2).

4. Method according to any one of claims 1 to 3, **characterized in that** the target value, once determined, is displayed on the input unit (2).

5. Method according to any one of claims 1 to 4, **characterized in that** the initial value and the target value of a parameter (P1, ..., Pn) are displayed graphically within the slider control (5).

## Revendications

1. Procédé de réglage d'au moins un paramètre (P1, ..., Pn) d'une fonction de transfert qui définit, au moins partiellement, un comportement entrée/sortie d'une unité système (4), ladite unité système (4) étant reliée fonctionnellement à une unité de calcul (1) dotée d'une unité de saisie (2) permettant le réglage dudit au moins un paramètre (P1, ..., Pn), **caractérisé en ce que**, dans un premier temps, une valeur initiale pour ledit au moins un paramètre (P1, ..., Pn) est réglée à l'aide de l'unité de saisie (2), et **en ce que**, dans un second temps, une valeur cible pour le paramètre (P1, ..., Pn) correspondant est réglée à l'aide de l'unité de saisie (2), **en ce que** les valeurs initiales et les valeurs cibles pour chaque paramètre (P1, ..., Pn) sont réglées chacune au moyen d'un curseur (5), chaque curseur (5) étant représenté graphiquement de manière individuelle sur l'unité de saisie (2), **en ce qu'**un élément de réglage (6) du curseur (5) est déplacé vers la valeur initiale du paramètre (P1, ..., Pn) concerné, puis, par la suite, l'élément de réglage (6) du même curseur (5) associé audit paramètre (P1, ..., Pn) est déplacé vers la valeur cible, et **en ce que** seules les valeurs initiales possibles pour un paramètre (P1, ..., Pn) et seules les valeurs cibles possibles pour un paramètre (P1, ..., Pn) peuvent être réglées au moyen de l'élément de réglage (6).

2. Procédé selon la revendication 1, **caractérisé en ce que** l'unité de saisie (2) est constituée d'un écran tactile, ou **en ce que** l'unité de saisie (2) est constituée d'un écran associé à un dispositif de pointage (3) qui lui est fonctionnellement relié, l'écran affichant, dans un état de fonctionnement de l'écran, celui-ci affiche un curseur qui représente une position du dispositif de pointage (3).

3. Procédé selon la revendication 1 ou 2, **caractérisé en ce que** la valeur initiale, une fois déterminée, est affichée sur l'unité de saisie (2).

4. Procédé selon l'une des revendications 1 à 3, **caractérisé en ce que** la valeur cible, une fois déterminée, est affichée sur l'unité de saisie (2).

5. Procédé selon l'une des revendications 1 à 4, **caractérisé en ce que** la valeur initiale et la valeur cible d'un paramètre (P1, ..., Pn) sont affichées graphiquement au sein du curseur (5).
